# EUROPÄISCHE PATENTSCHRIFT

(11) **EP 4 217 632 B1**
(45) Veröffentlichungstag und Bekanntmachung des Hinweises auf die Patenterteilung: **31.07.2024**
(21) Anmeldenummer: 21783443.1
(22) Anmeldetag: 23.09.2021
(51) Int. Cl.: F16K 37/00

(54) **JOCH ZUR ANBINDUNG EINES ANTRIEBS SOWIE VON ELEKTRISCHEN UND/ODER MECHATRONISCHEN BAUELEMENTEN AN EIN STELLVENTIL**
YOKE FOR ATTACHING A DRIVE AND ELECTRICAL AND/OR MECHATRONIC COMPONENTS TO AN ACTUATING VALVE
CULASSE POUR LA FIXATION D'UN ENTRAÎNEMENT ET DE COMPOSANTS ÉLECTRIQUES ET/OU MÉCATRONIQUES À UNE SOUPAPE D'ACTIONNEMENT

(30) Priorität: 24.09.2020 DE 202020105473 U
(43) Veröffentlichungstag der Anmeldung: 02.08.2023
(73) Patentinhaber: Samson Aktiengesellschaft, 60314 Frankfurt (DE)
(72) Erfinder: KOINKE, Janusz, 63179 Obertshausen (DE); KRAUSE, Sebastian, 63486 Bruchkoebel (DE); MERSCHER, Michael, 63322 Roedermark (DE)
(74) Vertreter: Puschmann Borchert Kaiser Klettner Patentanwälte Partnerschaft mbB
(86) Internationale Anmeldenummer: PCT/EP2021/076260
(87) Internationale Veröffentlichungsnummer: WO 2022/063929

(56) Entgegenhaltungen:
- CN-A- 109 578 594
- DE-U1- 202008 012 491
- FR-A1- 2 733 026
- US-A- 2 598 062
- US-A- 5 220 843
- US-A1- 2004 155 210

## Beschreibung

Die Erfindung betrifft ein Joch zur Anbindung eines Antriebs sowie zur Anbindung von elektrischen und/oder mechatronischen Bauelemente an ein Stellventil gemäß dem Anspruches 1 sowie ein Stellgerät für eine verfahrenstechnische Anlage gemäß der im Oberbegriff des Anspruches 8 angegebenen Art.

Bei verfahrenstechnischen Anlagen werden beispielsweise Prozessfluidströme in Leitungen über Stellgeräte verfahrenstechnischen Prozessen zugeführt. Die Prozessfluidströme sind verfahrens- und betriebsgemäß nach bestimmten Regelgrößen einzustellen, unter anderem im Hinblick auf die Durchflussmenge. Zudem können diese Prozessfluidströme kontinuierlich oder diskontinuierlich in der verfahrenstechnischen Anlage einem verfahrenstechnischen Prozess zugeführt werden. Zur Steuerung und Regelung dieser Prozessfluidströme dienen die Stellgeräte.

Derartige Stellgeräte sind aus dem Stand der Technik hinreichend bekannt und umfassen in der Regel ein Stellventil, ein im Gehäuse des Stellventils beweglich gelagertes Ventilglied zum Regulieren eines Prozessfluides sowie einen mit dem Ventilglied in Wirkverbindung stehenden Antrieb zum Bewegen des Ventilglieds. Ein derartiges Stellgerät ist beispielsweise aus der US 6,742,765 B2 bekannt.

Es ist weiterhin Stand der Technik zum Verbinden des Antriebs mit dem Gehäuse des Stellventils ein sogenanntes Joch vorzusehen. Über das Joch ist der Antrieb beabstandet mit dem Gehäuse des Stellventils verbunden, vgl. US 6,742,765, WO 2014/011721 A1.

Das Joch muss hohen Kräften und Temperaturen standhalten, da es die vollständige Kraft des Antriebes als auch dessen Gewichtskraft abstützen muss. Während eines Prozesses treten auch Schwingungen auf, welche das Stellgerät - und vor allem das Joch - stark belasten.

Neben Stellungsregler zum Regulieren der Stellung des Ventilgliedes, weisen moderne Stellventile häufig mehrere im Gehäuse des Stellventils angebrachte Sensoren, um z.B. Drücke, Temperaturen und/oder Durchflüsse des Prozessmediums zu messen, auf. Für die Auswertung solcher, zusätzlicher Messdaten werden zusätzliche Messumformer benötigt. Die Anbindung dieser Anbauteile bzw. Anbaugeräte, nämlich Regler und/oder Messumformer, erfolgt in der Regel ebenfalls über das Joch. Hierzu weist das Joch entsprechende Schnittstellen auf, über die die Anbauteile mit dem Joch verbindbar sind.

Um den hohen Kräften und Temperaturen standzuhalten, ist das Joch in der Regel als ein einteiliges Gußteil ausgebildet, welches mechanisch nachbearbeitet wird, um entsprechende Schnittstellen für die Anbauteile bzw. Anbaugeräte Stellungsregler und Messumformer, für den Antrieb sowie zur Anbindung des Joches an das Gehäuse des Stellventils zu realisieren. Als nachteilig erweist sich hierbei, dass - je mehr Anbauteile vorgesehen sind, die über entsprechende Schnittstellen mit dem Joch zu verbinden sind - die Komplexität des Gussteils und damit die Kosten des Gussteils sowie die Kosten für die Nachbearbeitung steigen.

Ein gattungsgemäßes, die Merkmale des Obergriffes des Anspruches 1 aufweisendes Joch zur Anbindung eines Antriebs sowie von elektrischen und/oder mechatronischen Bauelemente an ein Stellventil ist in der US 2 598 062 A und in der CN 109 578 594 offenbart. Ergänzend wird noch auf die US 5 220 843 A und die FR 2 733 026 A1 verwiesen.

Der Erfindung liegt der Aufgabe zugrunde ein Joch gemäß der im Oberbegriff des Anspruches 1 angegebenen Art derart weiterzubilden, dass bei einer kostengünstigen Herstellung eine Anbindung mehrerer Anbauteile bzw. Anbaugeräte ermöglicht ist.

Diese Aufgabe wird durch die kennzeichnenden Merkmale des Patentanspruches 1 in Verbindung mit seinen Oberbegriffsmerkmalen gelöst.

Die Unteransprüche 2 bis 4 bilden vorteilhafte Weiterbildungen des erfindungsgemäßen Joches.

In bekannter Art und Weise ist das Joch zur Anbindung eines Antriebs sowie von elektrischen und/oder mechatronischen Bauelemente an ein Stellventil mehrteilig, ein erstes Jochelement und ein - in Bezug zum ersten Jochelement als ein separates Bauteil ausgebildetes, mit dem ersten Jochelement fest verbundenes - zweites Jochelement aufweisend ausgebildet. Während über das erste Jochelement das Joch mit einem Gehäuse des Stellventils verbindbar ist, sind über das zweite Jochelement der Antrieb und das bzw. die elektrische und/oder mechatronische Bauelement an das Joch anbindbar.

Aufgrund der geteilten Ausbildung die beiden Jochelemente sind diese konstruktiv einfach zu realisieren, sodass eine einfachere Herstellung und damit kostengünstigere Fertigung ermöglicht ist.

Um insbesondere eine ausreichende Festigkeit gegenüber mechanischer und thermischer Belastung des Jochs zu gewährleisten, ist nunmehr erfindungsgemäß vorgesehen, dass das erste und zweite Jochelement so dimensioniert und ausgebildet, dass das erste Jochelement eine im Vergleich zum zweiten Jochelement höhere Festigkeit gegenüber mechanischer und thermischer Belastung aufweist. Diese Ausgestaltung hat den Effekt, dass das erste Jochelement, das aufgrund seiner Nähe zum Stellventil großen statischen und thermischen Belastungen ausgesetzt ist, nunmehr gezielt in Hinblick auf diese am ersten Jochelement herrschenden Randbedingungen, nämlich die herrschenden statischen und thermischen Belastungen ausgelegt ist. Hierzu ist erfindungsgemäß das erste Jochelement als ein Gußteil ausgebildet, da hierdurch auf kostengünstige Art und Weise die Ausbildung entsprechend großer Wandstärken und eine an den Spannungsverlauf angepasste Kontur ermöglicht ist. Das zweite Jochelement, das aufgrund der größeren Entfernung zum Gehäuse des Stellventils und damit zum Prozessfluid geringerer mechanischer und insbesondere thermischer Belastung ausgesetzt ist, ist erfindungsgemäß in Form einer Blechkonstruktion ausgeführt. Die Ausbildung des zweiten Jochelement als Blechkonstruktion erweist sich als vorteilhaft, da diese sehr kostengünstig und ohne bzw. lediglich geringer Nachbearbeitung herstellbar ist. Ein weiterer Vorteil ist, dass aufgrund der Ausbildung als Blechkonstruktion das zweite Jochelement sehr einfach anpassbar bzw. veränderbar ist, um z.B. andere Zusatzbaugruppen zu tragen, ohne das teure Werkzeuge geändert werden müssen.

Um ohne viel Kosten und Aufwand die Aufnahme unterschiedlicher Anbauteile bzw. Anbaugeräte und/oder Verkleidungen zu ermöglichen, umfasst die das zweite Jochelement bildende Blechkonstruktion vorzugsweise mehre, stoffschlüssig miteinander verbundene Blechteile. Hierdurch ist in vorteilhafte Weise eine funktionale und kostengünstige Realisierung gewährleistet. Das Blech kann dabei lasergeschnitten, genippelt, gestanzt oder wasserstrahlgeschnitten werden. Zur stoffschlüssigen Verbindung bieten sich Schweißverfahren, wie MIG, MAG, WIG, Elektronenstrahl oder Laserschweißen an.

Die Verbindung der beiden Jochelemente erfolgt bevorzugt mittels einer stoff-, kraft- und/oder formschlüssigen Verbindung, beispielsweise in Form einer Schweiß-, Schraub- oder Nietverbindung.

Eine besonders bevorzugte Ausführungsform des erfindungsmäßen Joches zeichnet sich dadurch aus, dass am ersten Jochelement ein das Gehäuse des Stellventils verschließender Gehäusedeckel integral angeformt ist. Die integrale Anformung des Gehäusedeckels an das erste Jochelement, also die einteilige Ausbildung von Gehäusedeckel und erstem Jochelement erweist als besonders vorteilhaft, da nunmehr über den am ersten Jochelement integral angeformten Gehäusedeckel, das Joch unmittelbar mit dem Gehäuse des Stellventils verbunden werden kann, sodass die Ausbildung/Herstellung einer entsprechenden Schnittstelle am ersten Jochelement, die Ausbildung eines korrespondierenden Gehäuseflanschs am Gehäuse des Stellventils sowie entsprechende Befestigungsmittel zum Verbinden von Joch und Gehäuse nicht mehr benötigt werden.

Der Erfindung liegt des Weiteren die Aufgabe zugrunde Stellgerät für eine verfahrenstechnische Anlage gemäß der im Oberbegriff des Patentanspruches 5 angegebenen Art zur Verfügung zu stellen, das einfacher und kostengünstiger herstellbar ist.

Diese Aufgabe wird die kennzeichnenden Merkmale des Anspruches 5 in Verbindung mit seinen Oberbegriffsmerkmalen gelöst.

Der Unteranspruch 6stellt eine vorteilhafte Weiterbildung des Stellgeräts dar.

In bekannter Art und Weise umfasst das Stellgerät für eine verfahrenstechnische Anlage ein Stellventil, mit einem im Gehäuse des Stellventils bewegbar angeordnetem Ventilglied zum Regulieren eines Prozessfluids, sowie einen mit dem Ventilglied in Wirkverbindung stehenden Antrieb zum Bewegen des Ventilglieds. Ferner umfasst das Stellgerät in bekannter Art und Weise mindestens ein elektrisches und/oder mechatronisches Bauteil sowie ein Joch, über das der Antrieb und das mindestens eine elektrische und/oder mechatronische Bauteil mit dem Gehäuse des Stellventils verbunden ist.

Erfindungsgemäß ist nun vorgesehen, dass das Joch nach einem der Ansprüche 1 bis 4 ausgebildet ist.

Sämtliche Ausführungen zum erfindungsgemäßen Joch lassen sich analog auf das erfindungsgemäße Stellgerät übertragen, so dass mit diesem die zuvor genannten Vorteile erzielt werden.

Gemäß einer Ausführungsform des erfindungsgemäßen Stellgeräts handelt es sich bei dem elektrischen und/oder mechatronische Bauteil um einen Stellungsregler und/oder um einen Messwandler.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Darstellung eines erfindungsgemäßen Stellgeräts;
- Fig. 2: das Stellgerät aus Fig. 1 in einer Explosionsansicht;
- Fig. 3: eine perspektivische Darstellung des im Stellgerät verbauten erfindungsmäßen Joches, und
- Fig. 4: das Joch aus Fig. 3 in einer Explosionsansicht.

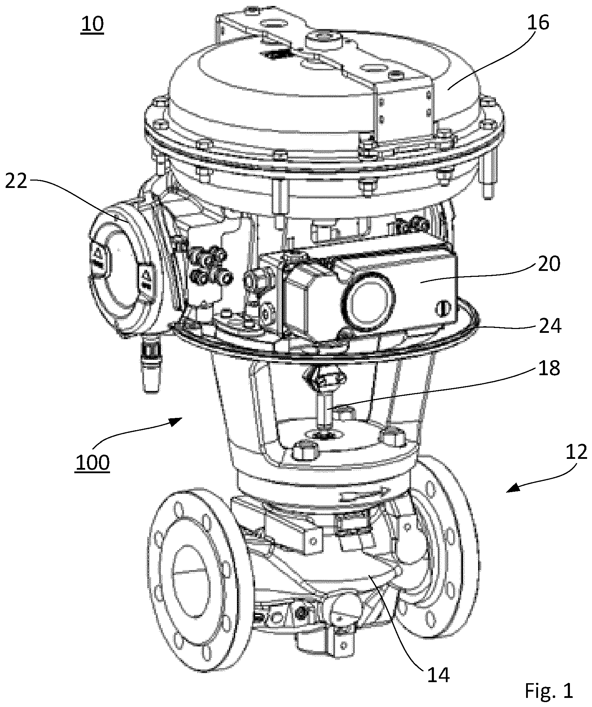

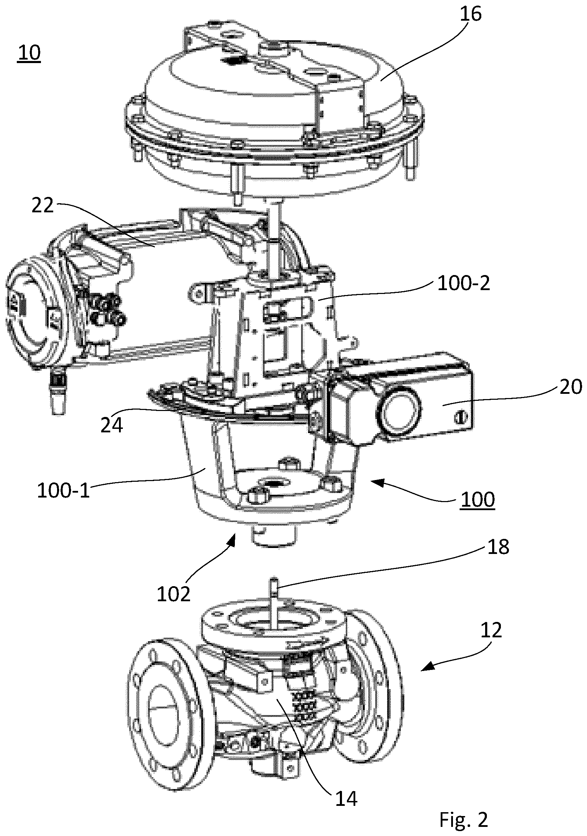

Fig. 1 und Fig. 2 zeigen ein insgesamt mit der Bezugsziffer 10 bezeichnetes Stellgerät. Das Stellgerät 10 umfasst ein Stellventil 12, dessen Gehäuse 14 über ein insgesamt mit der Bezugsziffer 100 bezeichnetes Joch mit einem Antrieb 16 verbunden ist. Zum Regulieren eines Prozessfluids ist in bekannter Art und Weise im Gehäuse14 des Stellventils 12 ein mit dem Antrieb 16 in Wirkverbindung stehendes, über den Antrieb 16 bewegbares Ventilglied angeordnet.

Die Wirkverbindung zwischen Ventilglied und Antrieb erfolgt über eine mit dem Ventilglied verbundene Ventilgliedstange 18, nachfolgend auch Schaft genannt. Der Schaft 18 ist vom Inneren des Gehäuses 14 des Stellventils 12 nach außen geführt und mittels einer Dichtung, wie einer Packung oder eines Dichtbalges gegen Austreten des Prozessfluides abgedichtet. Der Schaft 18 kann somit von außen mittels des Antriebes 16 bewegt werden, sodass sich die Stellung des Ventilgliedes im Inneren des Gehäuse 14 gegenüber einer Sitzbohrung verändert und der Durchlassquerschnitt zum Regulieren des Prozessfluides veränderbar ist.

Als Antriebe 16 können pneumatische als auch elektrische Antriebe verwendet werden. Die Antriebe 16 können dabei eine Vorsehung für eine Sicherheitsstellung besitzen, wobei bei fehlender elektrischer und oder pneumatischer bzw. hydraulischer Versorgung der Antrieb 16 zwangsweise in eine Sicherheitsstellung verfährt. Das ist in der Regel eine vollständig geschlossene oder vollständig offene Position. Solche Sicherheitsstellungen können mittels Energiespeicher realisiert werden. Solche ein Energiespeicher können z.B. mittels Federn oder sonstiger Akkus umgesetzt sein.

Weiterhin umfasst das Stellgerät 10 einen Stellungsregler 20 zum Regulieren der Stellung des Ventilglieds sowie einen Messwandler 22 zur Auswertung von Messdaten, wie z.B. Druck, Temperatur und/oder Durchfluss des Prozessfluids, die von am Gehäuse 14 des Stellventils 12 angebrachte Sensoren zur Verfügung gestellt werden.

Wie Fig. 1 und 2 weiterhin zu entnehmen ist, sind neben dem Antrieb 16, der über das Joch 100 beabstandet mit Gehäuse 14 des Stellventils 12 verbunden ist, noch die Bauteile Stellungsregler 20, Messwandler 22 sowie ein Verkleidungsbauteil 24 am Joch 100 gelagert bzw. befestigt.

Erfindungsgemäß ist nun vorgesehen, dass das Joch 100 zweiteilig ausgebildet ist und ein erstes Jochelement 100-1 und ein - in Bezug zum ersten Jochelement 100-1 als ein separates Bauteil ausgebildetes, mit dem ersten Jochelement 100-1 fest verbundenes - zweites Jochelement 100-2 aufweist, vgl. Fig. 2. Vorliegend sind das erste und zweite Jochelement 100-1, 100-2 mittels einer Schraubverbindung fest miteinander verbindbar.

Wie insbesondere aus Fig. 2 ersichtlich ist, ist dabei erste Jochelement 100-1 mit dem Gehäuse 14 des Stellventils 12 verbindbar, während Antriebs 16, Stellungsregler 20 und Messwandler 20 am zweiten Jochelement 100-2 befestigbar sind.

Durch die erfindungsgemäße Ausbildung ist es nun in vorteilhafter Weise möglich, dass das erste und zweite Jochelement 100-1, 100-2 insbesondere in Hinblick auf ihre Gestaltung, Dimensionierung und Materialwahl auf die am jeweiligen Jochelement herrschenden Randbedingungen, wie mechanische und thermische Belastung, Ausbilden von Schnittstellen, Kabelführung auszulegen.

Vorliegend ist hier das erste Jochelement 100-1 als ein Gußteil ausgebildet. Die Ausbildung des ersten Jochelements 100-1 als Gußteil erweist sich als vorteilhaft, da hierdurch auf eine einfache Art und Weise entsprechende Wandstärken sowie auf den Spannungsverlauf angepasste Konturen realisierbar sind, um die im Anschluss an das drucktragende Gehäuse 14 des Stellventils 12 vorliegenden hohen mechanischen und thermischen Belastung aufnehmen zu können.

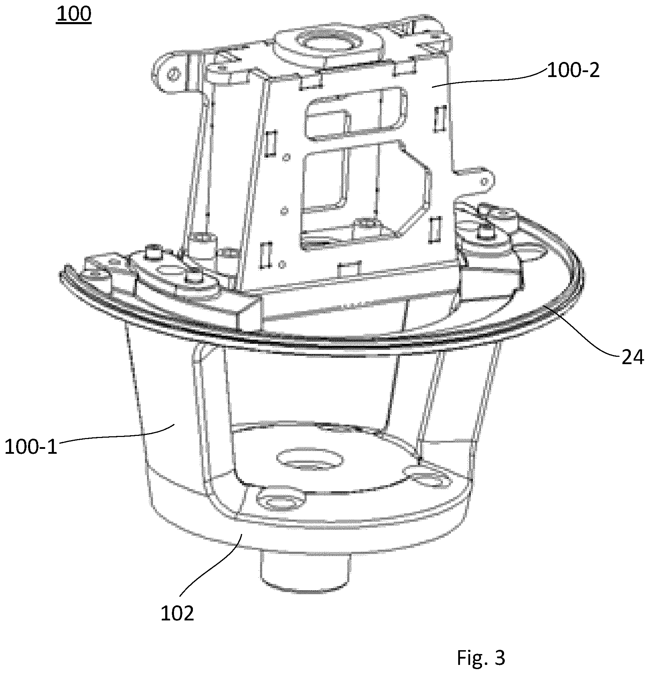

Wie Fig. 2 und Fig. 3 weiter zu entnehmen ist, ist am ersten Jochelement 100-1 zudem ein das Gehäuse 14 des Stellventils 12 verschließender Gehäusedeckel 102 integral angeformt. Somit ist das Joch 100 über den am ersten Jochelement 100-1 integral angeformten Gehäusedeckel 102 unmittelbar mit dem Gehäuse 14 des Stellventils befestigbar. Hierdurch wird eine weitere Schnittstelle sowie die Komponente "Deckel mit Flansch" vollständig eliminiert.

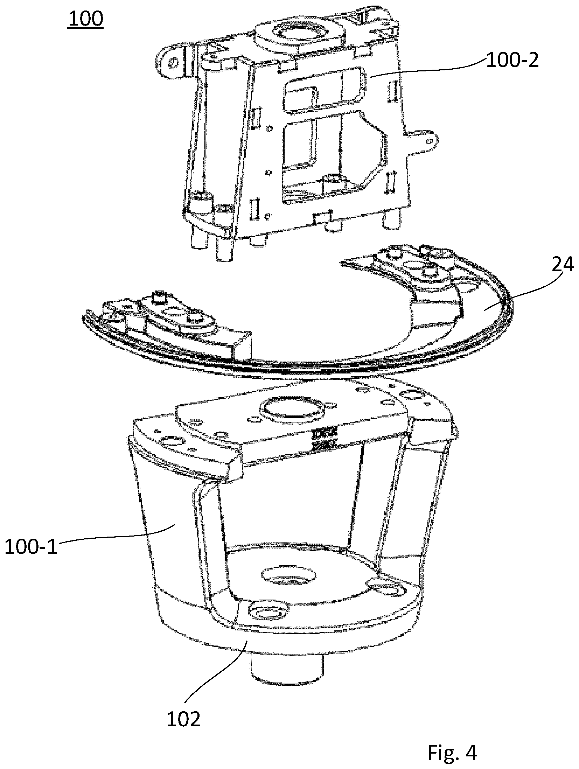

Das zweite Jochelement 100-2, das aufgrund seiner größeren Entfernung Gehäuse 14 des Stellventils 12 geringeren mechanischen und insbesondere thermischen Belastungen ausgesetzt ist, ist vorliegend als eine mehrere Blechteile umfassende Blechkonstruktion ausgebildet. Die Blechteile sind dabei mittels Verschweißen stoffschlüssig miteinander verbunden. Wie insbesondere Fig. 4 ersichtlich weist das zweite Jochelement 100-2 entsprechende Schnittstellen zum Anbinden des Antriebs 16 sowie des Stellungsreglers 20 und des Messwandlers 22 auf.

Aufgrund der Ausbildung des zweiten Jochelements 100-2 als Blechkonstruktion ist eine besonders kostengünstige, insbesondere wenig bis keine Nachbearbeitung erfordernde Herstellung des zweiten Jochelements 100-2 ermöglicht. Ein weiterer Vorteil ist, dass aufgrund der Ausbildung als Blechkonstruktion das zweite Jochelement 100-2 sehr einfach anpassbar bzw. veränderbar ist, um z.B. andere Zusatzbaugruppen zu tragen, ohne dass teure Werkzeuge geändert werden müssen.

### Bezugszeichenliste

- 10: Stellgerät
- 12: Stellventil
- 14: Gehäuse des Stellventils
- 16: Antrieb
- 18: Ventilstange
- 20: Stellungsregler
- 22: Messwandler
- 24: Verkleidungsbauteil
- 100: Joch
- 100-1: erstes Jochelement
- 100-2: zweites Jochelement
- 102: integral angeformter Gehäusedeckel

## Patentansprüche

1. Joch (100) zur Anbindung eines Antriebs (16) sowie von elektrischen und/oder mechatronischen Bauelementen (20, 22) an ein Stellventil (12), wobei das Joch (100) mehrteilig, ein erstes Jochelement (100-1) und ein zweites Jochelement (100-2) aufweisend ausgebildet ist, wobei das Joch (100) über das erste Jochelement (100-1) mit einem Gehäuse (14) des Stellventils (12) und über das zweite Jochelement (100-2) mit dem Antrieb (16) und den elektrischen und/oder mechatronischen Bauelementen (20, 22) verbindbar ist; **dadurch gekennzeichnet, dass** das erste und zweite Jochelement (100-1, 100-2) so dimensioniert und ausgebildet sind, dass das erste Jochelement (100-1) eine im Vergleich zum zweiten Jochelement (100-2) höhere Festigkeit gegenüber mechanischer und thermischer Belastung aufweist, wobei das erste Jochelement (100-1) als ein Gußteil und das zweite Jochelement (100-2) als eine Blechkonstruktion ausgebildet ist.

2. Joch (100) nach Anspruch 1, **dadurch gekennzeichnet, dass** das als Blechkonstruktion ausgebildete zweite Jochelement (100-2) mehrere, stoffschlüssig miteinander verbundene Blechteile umfasst.

3. Joch (100) nach einem der vorgenannten Ansprüche, **dadurch gekennzeichnet, dass** das erste und zweite Jochelement (100-1, 100-2) stoff-, kraft- und/oder formschlüssig miteinander verbunden sind.

4. Joch (100) nach einem der vorgenannten Ansprüche, **dadurch gekennzeichnet, dass** am ersten Jochelement (100-1) ein das Gehäuse (14) des Stellventils (12) verschließender Gehäusedeckel (102) integral angeformt ist.

5. Stellgerät (10) für eine verfahrenstechnische Anlage, umfassend ein Stellventil (12) mit einem im Gehäuse (14) des Stellventils (12) bewegbar angeordnetem Ventilglied zum Regulieren eines Prozessfluids, einen Antrieb (16) zum Bewegen des Ventilglieds, mindestens ein elektrisches und/oder mechatronisches Bauteil (20, 22) sowie ein Joch (100), über das der Antrieb (16) und das mindestens eine elektrische und/oder mechatronische Bauteil (20, 22) mit dem Gehäuse (14) des Stellventils (12) verbunden ist, **dadurch gekennzeichnet, dass** das Joch (100) nach einem der Ansprüche 1 bis 4 ausgebildet ist.

6. Stellgerät (10) nach Anspruch 5, **dadurch gekennzeichnet, dass** das mindestens eine elektrische und/oder mechatronische Bauteil (20, 22) ein Stellungsregler und/oder ein Messwandler ist.

## Claims

1. Yoke (100) for attaching a drive (16) and electrical and/or mechatronic components (20, 22) to an actuating valve (12), which yoke (100) is of a multi-part design, comprising a first yoke element (100-1) and a second yoke element (100-2), wherein the yoke (100) can be attached via the first yoke element (100-1) to a housing (14) of the control valve (12) and via the second yoke element (100-2) to the drive (16) and the electrical and/or mechatronic components (20, 22), **characterized in that** the first and second yoke elements (100-1, 100-2) are dimensioned and designed in such a way that the first yoke element (100-1) is more resistant to mechanical and thermal stress than the second yoke element (100-2), with the first yoke element (100-1) being designed as a cast part and the second yoke element (100-2) being designed as a sheet metal structure.

2. Yoke (100) according to claim 1, **characterized in that** the second yoke element (100-2), which is designed as a sheet metal structure, comprises a plurality of sheet metal parts connected to one another by a material bond.

3. Yoke (100) according to any one of the preceding claims, **characterized in that** the first and second yoke elements (100-1, 100-2) are connected to one another in a material-bonded, a non-positive and/or form-fitting manner.

4. Yoke (100) according to any one of the preceding claims, **characterized in that** a housing cover (102) that seals the housing (14) of the control valve (12) is integrally formed on the first yoke element (100-1).

5. Actuator (10) for a process engineering system, comprising: an actuating valve (12) including a valve member that is arranged so as to be movable in the housing (14) of the actuating valve (12) for regulating a process fluid, a drive (16) for moving the valve member, at least one electrical and/or mechatronic component (20, 22), and a yoke (100) via which the drive (16) and the at least one electrical and/or mechatronic component (20, 22) are connected to the housing (14) of the control valve (12), **characterized in that** the yoke (100) is of the design specified in any one of claims 1 to 4d above.

6. Actuator (10) according to claim 5, **characterized in that** the at least one electrical and/or mechatronic component (20, 22) is a positioner and/or a transducer.

## Revendications

1. Culasse (100) pour le raccordement d'un entraînement (16) ainsi que de composants électriques et/ou mécatroniques (20, 22) à une soupape de réglage (12), dans laquelle la culasse (100) est réalisée en plusieurs parties de manière à présenter un premier élément de culasse (100-1) et un deuxième élément de culasse (100-2), dans laquelle la culasse (100) peut être reliée par l'intermédiaire du premier élément de culasse (100-1) à un carter (14) de la soupape de réglage (12) et par l'intermédiaire du deuxième élément de culasse (100-2) à l'entraînement (16) et aux composants électriques et/ou mécatroniques (20, 22) ; **caractérisée en ce que** les premier et deuxième éléments de culasse (100-1, 100-2) sont dimensionnés et réalisés de sorte que le premier élément de culasse (100-1) présente une résistance à une sollicitation mécanique et thermique plus élevée en comparaison du deuxième élément de culasse (100-2), dans laquelle le premier élément de culasse (100-1) est réalisé sous la forme d'une pièce moulée et le deuxième élément de culasse (100-2) sous la forme d'une structure en tôle.

2. Culasse (100) selon la revendication 1, **caractérisée en ce que** le deuxième élément de culasse (100-2) réalisé sous la forme d'une structure en tôle comprend plusieurs pièces en tôle, reliées les unes aux autres par liaison de matière.

3. Culasse (100) selon l'une quelconque des revendications précédentes, **caractérisée en ce que** les premier et deuxième éléments de culasse (100-1, 100-2) sont reliés l'un à l'autre par liaison de matière, à force et/ou par coopération de formes.

4. Culasse (100) selon l'une quelconque des revendications précédentes, **caractérisée en ce qu'**un couvercle de carter (102) fermant le carter (14) de la soupape de réglage (12) est formé d'un seul tenant sur le premier élément de culasse (100-1).

5. Appareil de réglage (10) pour une installation de traitement, comprenant une soupape de réglage (12) avec un organe de soupape disposé de manière mobile dans le carter (14) de la soupape de réglage (12) pour réguler un fluide de processus, un entraînement (16) pour déplacer l'organe de soupape, au moins une pièce électronique et/ou mécatronique (20, 22) ainsi qu'une culasse (100), par l'intermédiaire de laquelle l'entraînement (16) et la au moins une pièce électronique et/ou mécatronique (20, 22) est reliée au carter (14) de la soupape de réglage (12), **caractérisé en ce que** la culasse (100) est réalisée selon l'une quelconque des revendications 1 à 4.

6. Appareil de réglage (10) selon la revendication 5, **caractérisé en ce que** la au moins une pièce électronique et/ou mécatronique (20, 22) est un régulateur de position et/ou un convertisseur de mesure.
